# EUROPEAN PATENT APPLICATION

(11) **EP 4 667 918 A1**
(43) Date of publication of application: **24.12.2025**
(21) Application number: 25183852.0
(22) Date of filing: 18.06.2025
(51) Int. Cl.: G01N 23/20

(54) **X-RAY DIFFRACTION INSPECTION SYSTEM AND METHOD FOR OPERATING SAME**

(30) Priority: 18.06.2024 US 202418746864
(71) Applicant: RTX Corporation, Farmington, CT 06032 (US)
(72) Inventor: LEE, Seung-Yub, Glastonbury, 06033 (US); CERNATESCU, Iuliana, Glastonbury, 06033 (US); WOERNER, William, Glastonbury, 06033 (US); GOLAN, John, Hebron, 06231 (US); YU, Jianguo, Glastonbury, 06033 (US)
(74) Representative: Dehns

(57) **Abstract**

An x-ray inspection system (72) includes a probe assembly (76) and a control assembly (78). The probe assembly (76) includes a probe head (82) including at least one x-ray source (92) and a plurality of x-ray detectors (96). The at least one x-ray source (92) is configured to generate and direct a x-ray beam (104) to a target material of a component (74). The plurality of x-ray detectors (96) includes at least a first x-ray detector and a second x-ray detector. Each of the first x-ray detector and the second x-ray detector is configured to receive an x-ray diffraction (106) of the target material resulting from an interaction with the x-ray beam (104). The control assembly (78) includes a controller (98) configured to scan the component (74) by controlling the at least one x-ray source (92) to direct the x-ray beam (104) to the target material and capturing material composition data for the target material from the x-ray diffraction (106) received by the first x-ray detector and the second x-ray detector and calculate a strain or a stress of the target material based on the material composition data.

## Description

### BACKGROUND

### 1. Technical Field

This disclosure relates generally to gas turbine engine components and, more particularly, to inspection systems and methods for inspecting gas turbine engine components installed in an aircraft propulsion system.

### 2. Background Information

Gas turbine engines, such as those found in aircraft propulsion systems, typically include bladed rotors and other rotational equipment components. At various maintenance intervals, gas turbine engine components may be inspected to identify component defects, damage, or wear. Various systems and methods for inspecting components are known in the art. While these known systems and methods may be suitable for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, an x-ray inspection system includes a probe assembly and a control assembly. The probe assembly includes a probe head. The probe head includes a housing, at least one x-ray source, and a plurality of x-ray detectors. The housing extends along a centerline of the probe assembly between a proximal end of the probe head and a distal end of the probe head. The at least one x-ray source is disposed at the housing. The at least one x-ray source is configured to generate and direct a x-ray beam to a target material of a component. The plurality of x-ray detectors includes at least a first x-ray detector and a second x-ray detector disposed at the housing. Each of the first x-ray detector and the second x-ray detector is configured to receive an x-ray diffraction of the target material resulting from an interaction with the x-ray beam. The control assembly includes a controller. The controller includes a processor connected in signal communication with a non-transitory memory including instructions which, when executed by the processor, cause the processor to scan the component by controlling the at least one x-ray source to direct the x-ray beam to the target material and capturing material composition data for the target material from the x-ray diffraction received by the first x-ray detector and the second x-ray detector and calculate one or both of a strain and a stress of the target material based on the material composition data.

In any of the aspects or embodiments described above and herein, the probe assembly may further include a flexible borescope guide tube connected to the probe head at the proximal end.

In any of the aspects or embodiments described above and herein, the probe head may further include a laser alignment device disposed at the housing. The laser alignment device may be configured to measure a distance between the probe head and the component.

In any of the aspects or embodiments described above and herein, the instructions, when executed by the processor, may further cause the processor to identify an acceptable condition or an unacceptable condition of the component by comparing the one or both of the strain and the stress to a threshold for the target material.

In any of the aspects or embodiments described above and herein, each x-ray detector of the plurality of x-ray detectors may be disposed at the distal end on a ring. The ring may extend circumferentially about a beam axis of the at least one x-ray source.

In any of the aspects or embodiments described above and herein, the probe assembly may further include at least one detector panel pivotably mounted to the housing. The plurality of x-ray detectors may be disposed on the at least one detector panel.

In any of the aspects or embodiments described above and herein, the at least one detector panel may include a flexible panel body. The flexible panel body may extend circumferentially about the centerline. The plurality of x-ray detectors may be disposed on the flexible panel body.

In any of the aspects or embodiments described above and herein, the flexible panel body may form a center aperture at the centerline. The at least one x-ray source may be configured to direct the x-ray beam through the center aperture.

In any of the aspects or embodiments described above and herein, the at least one detector panel may include a single detector panel. The single detector panel may extend lengthwise between and to a proximal panel end and a distal panel end. The single detector panel may be pivotably mounted to the housing at the proximal panel end. The plurality of detectors may be arrayed lengthwise on the single detector panel.

In any of the aspects or embodiments described above and herein, the probe assembly may further include an actuator disposed at the housing. The actuator may be operably connected to the at least one detector panel. The actuator may be configured to pivot the at least one detector panel between a deployed position and a stowed position. In the deployed position the at least one detector panel may have a greater radial span, relative to the centerline, than the at least one detector panel in the stowed position.

In any of the aspects or embodiments described above and herein, the at least one x-ray source may include a first x-ray source and a second x-ray source.

In any of the aspects or embodiments described above and herein, the first x-ray source may have a first x-ray beam wavelength, the second x-ray source may have a second x-ray beam wavelength, and the first x-ray beam wavelength may be different than the second x-ray beam wavelength.

According to another aspect of the present disclosure, a method for inspecting a component of a gas turbine engine for an aircraft propulsion system using an x-ray inspection system includes scanning the component with a probe assembly of the x-ray inspection system by directing an x-ray beam from at least one x-ray source of the probe assembly to a target material of the component and capturing material composition data for the target material from an x-ray diffraction received by a plurality of x-ray detectors of the probe assembly. The x-ray diffraction results from an interaction of the target material with the x-ray beam. The method further includes calculating a one or both of a strain and a stress of the target material based on material composition data captured from the x-ray diffraction received by the plurality of x-ray detectors and identifying an acceptable condition or an unacceptable condition of the component by comparing the one or both of the strain and the stress to a threshold for the target material.

In any of the aspects or embodiments described above and herein, the method may further include optically inspecting the component to identify a defect of the component. Scanning the component with the probe assembly may include scanning the component at the defect.

In any of the aspects or embodiments described above and herein, the method may further include positioning the probe assembly relative to the component, prior to scanning the component with the probe assembly. A first x-ray detector of the plurality of x-ray detectors may be positioned to receive the x-ray diffraction at a first angle relative to a scanned surface of the component, a second x-ray detector of the plurality of x-ray detectors may be positioned to receive the x-ray diffraction at a second angle relative to the scanned surface, and the first angle may be different than the second angle.

In any of the aspects or embodiments described above and herein, the method may further include positioning the probe assembly at a predetermined distance from the component, prior to scanning the component with the probe assembly, using a laser alignment device of the probe assembly.

In any of the aspects or embodiments described above and herein, the step of scanning the component with the probe assembly may be performed with the component and the gas turbine engine installed on an aircraft.

In any of the aspects or embodiments described above and herein, the probe assembly may further include a probe head. The probe head may include a housing, at least one detector panel, an actuator, the x-ray source, and the plurality of x-ray detectors. The housing extend along a centerline of the probe assembly. The at least one detector panel may be pivotably mounted to the housing. The actuator may be operably connected to the at least one detector panel. The plurality of x-ray detectors may be disposed on the at least one detector panel.

In any of the aspects or embodiments described above and herein, the method may further include pivoting the at least one detector panel from a stowed position to a deployed position with the actuator prior to scanning the component with the probe assembly. In the deployed position the at least one detector panel may have a greater radial span, relative to the centerline, than the at least one detector panel in the stowed position.

In any of the aspects or embodiments described above and herein, the method may further include inserting the probe assembly into the gas turbine engine and positioning the probe assembly at the component with the at least one detector panel in the stowed position.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates an aircraft including a propulsion system, in accordance with one or more embodiments of the present disclosure.
FIG. 2 schematically illustrates a cutaway, side view of an aircraft propulsion system including a gas turbine engine, in accordance with one or more embodiments of the present disclosure.
FIG. 3 illustrates a perspective view of a bladed rotor for a gas turbine engine, in accordance with one or more embodiments of the present disclosure.
FIG. 4 schematically illustrates an inspection system, in accordance with one or more embodiments of the present disclosure.
FIG. 5 schematically illustrates a probe assembly for the inspection system of FIG. 4, in accordance with one or more embodiments of the present disclosure.
FIG. 6 schematically illustrates another probe assembly for the inspection system of FIG. 4, in accordance with one or more embodiments of the present disclosure.
FIG. 7 schematically illustrates another probe assembly for the inspection system of FIG. 4 with the probe assembly in a deployed condition, in accordance with one or more embodiments of the present disclosure.
FIG. 8 schematically illustrates the probe assembly of FIG. 7 in a stowed condition in a deployed condition, in accordance with one or more embodiments of the present disclosure.
FIG. 9 schematically illustrates another probe assembly for the inspection system of FIG. 4 with the probe assembly in a deployed condition, in accordance with one or more embodiments of the present disclosure.
FIG. 10 schematically illustrates the probe assembly of FIG. 9 in a stowed condition in a deployed condition, in accordance with one or more embodiments of the present disclosure.
FIG. 11 schematically illustrates another probe assembly for the inspection system of FIG. 4, in accordance with one or more embodiments of the present disclosure.

### DETAILED DESCRIPTION

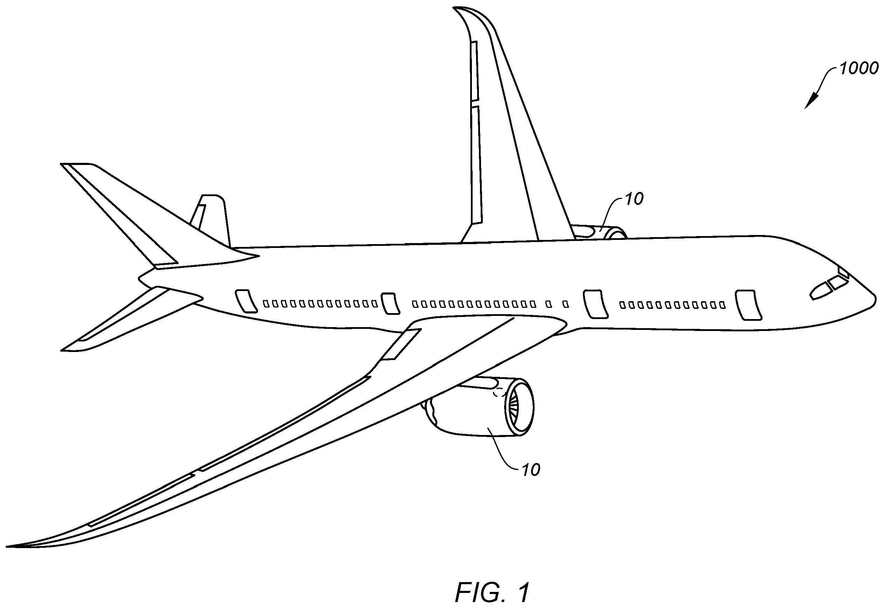

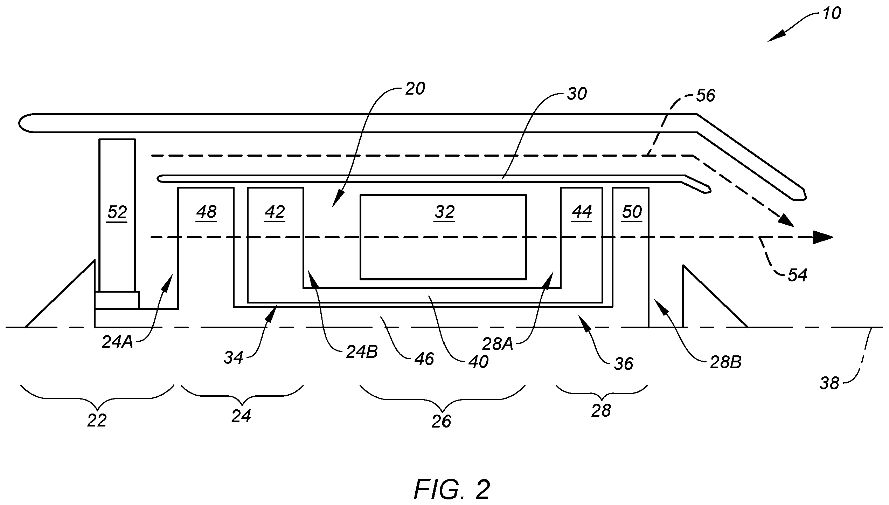

FIG. 1 illustrates a propulsion system 10 for an aircraft 1000. FIG. 2 schematically illustrates a cutaway, side view of the propulsion system 10. The propulsion system 10 of FIG. 2 includes a gas turbine engine 20. The gas turbine engine 20 of FIG. 2 is a multi-spool turbofan gas turbine engine. However, while the following description and accompanying drawings may refer to the turbofan gas turbine engine of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine.

The gas turbine engine 20 of FIG. 2 includes a fan section 22, a compressor section 24, a combustor section 26, a turbine section 28, and an engine static structure 30. The compressor section 24 of FIG. 2 includes a low-pressure compressor (LPC) 24A and a high-pressure compressor (HPC) 24B. The combustor section 26 includes a combustor 32 (e.g., an annular combustor). The turbine section 28 includes a high-pressure turbine (HPT) 28A and a low-pressure turbine (LPT) 28B.

Components of the fan section 22, the compressor section 24, and the turbine section 28 form a first rotational assembly 34 (e.g., a high-pressure spool) and a second rotational assembly 36 (e.g., a low-pressure spool) of the gas turbine engine 20. The first rotational assembly 34 and the second rotational assembly 36 are mounted for rotation about a rotational axis 38 (e.g., an axial centerline) of the gas turbine engine 20 relative to the engine static structure 30.

The first rotational assembly 34 includes a first shaft 40, a bladed first compressor rotor 42 for the high-pressure compressor 24B, and a bladed first turbine rotor 44 for the high-pressure turbine 28A. The first shaft 40 interconnects the bladed first compressor rotor 42 and the bladed first turbine rotor 44.

The second rotational assembly 36 includes a second shaft 46, a bladed second compressor rotor 48 for the low-pressure compressor 24A, and a bladed second turbine rotor 50 for the low-pressure turbine 28B. The second shaft 46 interconnects the bladed second compressor rotor 48 and the bladed second turbine rotor 50. The second shaft 46 may additionally be directly or indirectly coupled to a bladed fan rotor 52 for the fan section 22. For example, the second shaft 46 may be coupled to the bladed fan rotor 52 (e.g., an input shaft of the bladed fan rotor 52) by a reduction gear assembly configured to drive the bladed fan rotor 52 at a reduced rotational speed relative to the second shaft 46. The first shaft 40 and the second shaft 46 are concentric and configured to rotate about the rotational axis 38. The present disclosure, however, is not limited to concentric configurations of the first shaft 40 and the second shaft 46.

The engine static structure 30 may include one or more engine cases, cowlings, bearing assemblies, and/or other non-rotating structures configured to house and/or support (e.g., rotationally support) components of the gas turbine engine 20 sections 22, 24, 26, 28. The engine static structure 30 may form an exterior (e.g., an outer radial portion) of the gas turbine engine 20.

In operation of the gas turbine engine 20 of FIG. 2, ambient air is directed through the fan section 22 and into a core flow path 54 (e.g., an annular flow path) and a bypass flow path 56 (e.g., an annular flow path) by rotation of the bladed fan rotor 52. Airflow along the core flow path 54 is compressed by the low-pressure compressor 24A and the high-pressure compressor 24B, mixed and burned with fuel in the combustor 32, and then directed through the high-pressure turbine 28A and the low-pressure turbine 28B. The bladed first turbine rotor 44 and the bladed second turbine rotor 50 rotationally drive the first rotational assembly 34 and the second rotational assembly 36, respectively, in response to the combustion gas flow through the high-pressure turbine 28A and the low-pressure turbine 28B. The bypass flow path 56 may be disposed outside the engine static structure 30. For example, the engine static structure 30 and an outer aircraft propulsion system housing (e.g., a nacelle) may form an annular bypass duct radially therebetween, and airflow may be directed through the annular bypass duct along the bypass flow path 56.

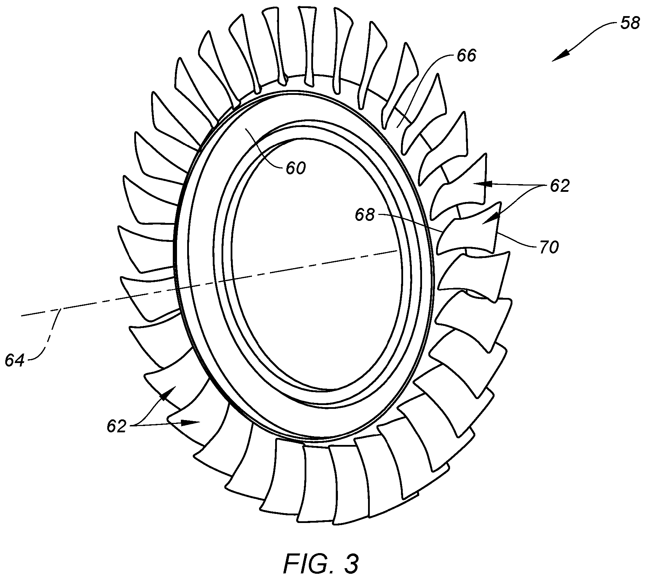

FIG. 3 illustrates a perspective view of a bladed disk 58. The bladed disk 58 may form a portion of a bladed rotor such as, but not limited to, the bladed first compressor rotor 42, the bladed first turbine rotor 44, the bladed second compressor rotor 48, and/or the bladed second turbine rotor 50. The bladed disk 58 of FIG. 2 includes a disk 60 and a plurality of blades 62 (e.g., airfoils). The disk 60 extends circumferentially about (e.g., completely around) an axis 64 (e.g., an axial centerline) of the bladed disk 58. The disk 60 forms all or a portion of a platform 66 of the bladed disk 58 on an outer radial side of the disk 60. The platform 66 extends circumferentially about (e.g., completely around) the axis 64. The blades 62 are arranged circumferentially on the disk 60 along the platform 66. The blades 62 may be mounted to the disk 60 at (e.g., on, adjacent, or proximate) the platform 66. For example, each of the blades 62 may be installed in a slot (e.g., a dovetail slot) formed by the disk 60. Alternatively, the bladed disk 58 (e.g., the disk 60 and the blades 62) may form an integrally bladed rotor ("IBR"; sometimes referred to as a "blisk"). Each of the blades 62 extends (e.g., radially extends) between and to a base end 68 of the respective blade 62 and a tip end 70 of the respective blade 62. The base end 68 is disposed at (e.g., on, adjacent, or proximate) the disk 60. Each of the blades 62 may further form a portion of the platform 66 at (e.g., on, adjacent, or proximate) the base end 68. The tip end 70 is disposed radially outward of the base end 68.

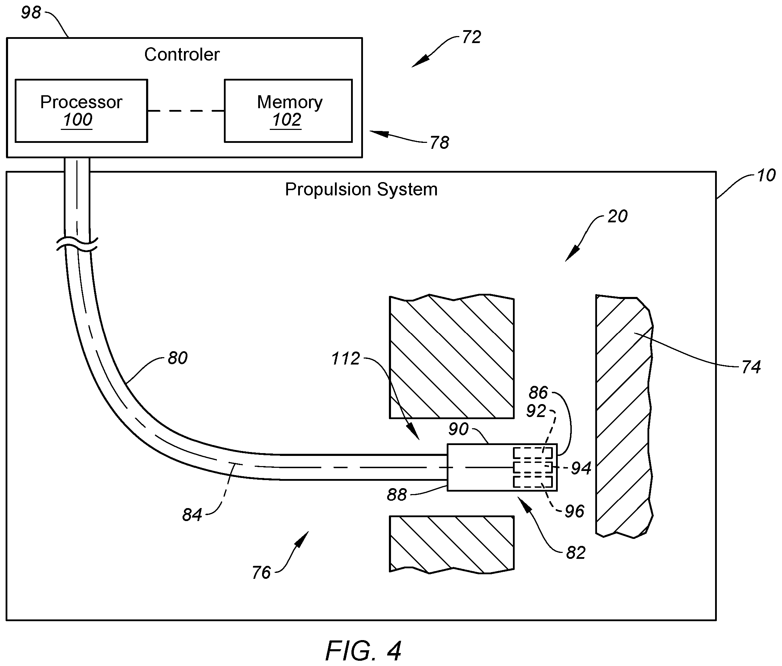

FIG. 4 schematically illustrates an inspection system 72 for inspecting a component 74 of the propulsion system 10. The inspection system 72 may be configured to facilitate inspection of the component 74 while the component 74 remains installed with the propulsion system 10 on the aircraft 1000 (e.g., the propulsion system 10 remains installed on wing, on fuselage, in airframe, etc.). The component 74, for example, may be disposed within an interior (e.g., an enclosed volume, an encased volume, etc.) of the propulsion system 10. Inspection of the component 74 may also be performed using the inspection system 72 while outside of an aircraft hangar and/or a dedicated inspection and/or repair facility (e.g., on a tarmac at an airport between aircraft flights). Inspection of the component 74 may thereby be performed with a relatively short aircraft downtime and/or a relatively minimal expense. The inspection system 72, of course, may also be used for inspecting the component 74 installed with the propulsion system 10 when that propulsion system 10 is not installed with the aircraft 1000 (e.g., prior to installation with the aircraft 1000 or following removal from the aircraft 1000) or with the component 74 removed from the propulsion system 10. Inspection of the component 74 using the inspection system 72 may facilitate identification of a defect (e.g., a surface defect and/or an internal defect), residual stresses, and/or strains of the component 74 associated with the defect. Examples of component 74 defects include physical damage such as, but not limited to, cracks, voids, dents, scratches, plastic deformation, and the like. The term "defect," as used herein, shall refer to a physical anomaly present within a component (e.g., the component 74) which negatively affects the useful life or performance of the component.

The component 74 may be any inspectable (e.g., metal) component 74 within the propulsion system 10. However, for ease of description, the component 74 may be described below as a portion of a bladed disk such as, but not limited to, the bladed disk 58 for the gas turbine engine 20. The component 74 may be a bladed turbine disk for a high-pressure turbine (HPT) or a low-pressure turbine (LPT) of a gas turbine engine. Alternatively, the component 74 may be a bladed compressor disk for a low-pressure compressor (LPC) or a high-pressure compressor (HPC) of a gas turbine engine. The present disclosure, however, is not limited to such exemplary component 74 configurations. The component 74, for example, may alternatively be configured as a hub, a shaft, or any rotating component within the propulsion system 10.

The inspection system 72 of FIG. 4 is configured as an x-ray inspection system. For example, the inspection system 72 may be configured to implement an x-ray non-destructive testing (NDT) technique such as, but not limited to, an x-ray diffraction (XRD) inspection process for crystalline materials. The inspection system 72 of FIG. 4 includes a probe assembly 76 and a control assembly 78. This inspection system 72 is operable to identify an atomic and/or molecular structure and structural characteristics of one or more target materials including, for example, the material(s) forming the component 74.

The probe assembly 76 may be a borescope probe assembly configured for insertion into the propulsion system 10 for inspection of the component 74. However, the probe assembly 76 of the present disclosure is not limited to borescope probe assembly configurations. The probe assembly 76 of FIG. 3, for example, includes a guide tube 80 and a probe head 82.

The guide tube 80 extends longitudinally along a longitudinal centerline 84 of the probe assembly 76 from a base end of the guide tube 80 to the probe head 82. The guide tube 80 is a flexible body. The guide tube 80 may include one or more internal actuators for manipulating a configuration of the probe assembly 76 and its guide tube 80 to aid in maneuvering the probe head 82 within an interior of the propulsion system 10 to the component 74.

The probe head 82 is disposed at a longitudinal distal end 86 of the probe assembly 76. The probe head 82 of FIG. 4, for example, extends longitudinally along the centerline 84 from a longitudinal proximal end 88 of the probe head 82 to the distal end 86 of the probe assembly 76; here, also a longitudinal distal end of the probe head 82. The probe head 82 includes a housing 90, at least one x-ray source 92, at least one laser alignment device 94, and at least one x-ray detector 96. The housing 90 extends along the centerline 84 between the proximal end 88 to the distal end 86.

The x-ray source 92 is mounted on and/or within the housing 90. For example, the x-ray source 92 may be mounted on the housing 90 at (e.g., on, adjacent, or proximate) the distal end 86. The x-ray source 92 is configured to emit, direct, and shape an x-ray beam onto one or more target materials such as, for example, the component 74. The x-ray source 92 may direct a single x-ray wavelength or a plurality of discrete x-ray wavelengths, which wavelengths may be selected for a particular target material to be inspected. Examples of the x-ray source 92 include, but are not limited to, a 1.54 Angstrom (Å) Cu Kα source, a 1.39Å Cu Kβ source, a 2.29Å Cr Kα source, a 2.08Å Cr Kβ source, or the like. The present disclosure, however, is not limited to any particular x-ray source configuration or emitted x-ray wavelength for the x-ray source 92.

The laser alignment device 94 is mounted on and/or within the housing 90. For example, the laser alignment device 94 may be mounted on the housing 90 at (e.g., on, adjacent, or proximate) the distal end 86. The laser alignment device 94 is configured to measure a distance between the probe head 82 (e.g., the laser alignment device 94) and the component 74.

The x-ray detector 96 is mounted on and/or within the housing 90. For example, the x-ray detector 96 may be mounted on the housing 90 at (e.g., on, adjacent, or proximate) the distal end 86. The x-ray detector 96 may be a one-dimensional (1D) x-ray detector or a two-dimensional (2D) x-ray detector. The x-ray detector 96 may be positioned relative to the x-ray source 92 to receive an x-ray diffraction of the x-ray beam directed by the x-ray source 92 onto the component 74. For example, the x-ray detector 96 may be positioned relative to the x-ray source 92 to receive the x-ray diffraction at a predetermined angle (e.g., a Bragg angle) relative to a direction of the x-ray beam. The predetermined angle may be specific to the target material (e.g., corresponding to a diffraction angle for the target material). The x-ray detector 96 may be fixedly positioned on the housing 90 relative to the x-ray detector 96 at the predetermined angle. Alternatively, the x-ray source 92 and/or the x-ray detector 96 may be movable to allow the x-ray source 92 and the x-ray detector 96 to be selectively positioned relative to one another (e.g., at the predetermined angle).

The control assembly 78 includes a controller 98. The controller 98 includes a processor 100 connected in communication (e.g., signal communication) with memory 102. The processor 100 may include any type of computing device, computational circuit, or any type of process or processing circuit capable of executing a series of instructions that are stored in the memory 102, thereby causing the processor 100 to perform or control one or more steps or other processes. The processor 100 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the inspection system 72 to accomplish the same algorithmically and/or by coordination of inspection system 72 components. For example, the memory 102 may include instructions which, when executed by the processor 100, cause the processor 100 to perform or control one or more inspection steps or functions. The memory 102 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 98. The control assembly 78 may include, or may be in communication with, an input device that enables a user to enter data and/or instructions, and may include, or be in communication with, an output device configured, for example to display information (e.g., a visual display or a printer), or to transfer data, etc. Communications between the controller 98 and components of the control assembly 78 (e.g., the x-ray source 92, the laser alignment device 94, and the x-ray detector 96) may be via a hardwire connection or via a wireless connection. A person of skill in the art will recognize that portions of the controller 98 may assume various forms (e.g., digital signal processor, analog device, etc.) capable of performing the functions described herein.

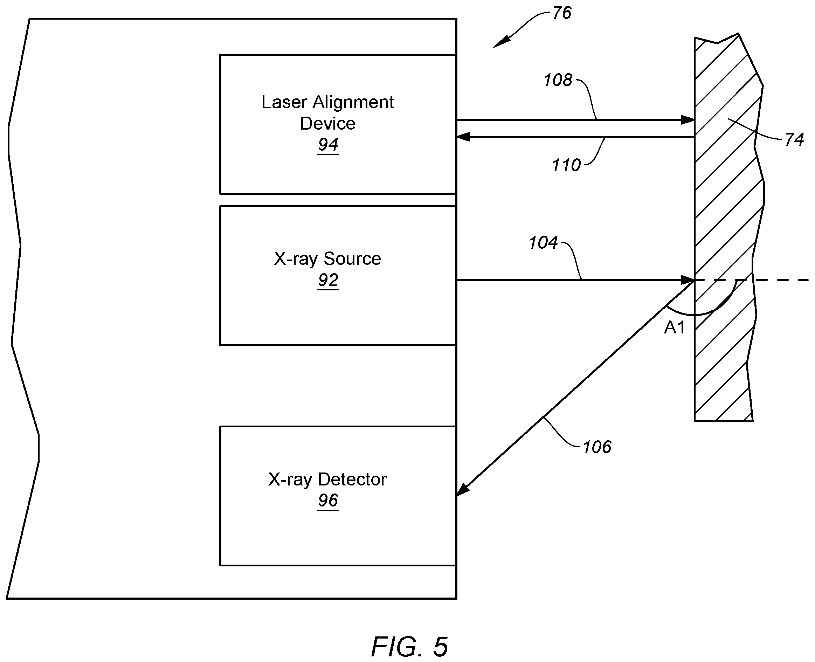

FIG. 5 schematically illustrates the probe assembly 76 relative to a portion of the component 74. The x-ray source 92 of FIG. 5 directs an x-ray beam 104 onto the component 74. The x-ray detector 96 of FIG. 5 is positioned relative to the x-ray source 92 to receive an x-ray diffraction 106 of the x-ray beam 104 by the component 74. For example, the x-ray detector 96 may be positioned relative to the x-ray source 92 to receive the x-ray diffraction 106 at an angle A1 (e.g., a Bragg angle) relative to the direction of the x-ray beam 104. The selected angle A1 may be specific to a target material of the component 74. The laser alignment device 94 is configured to direct a laser beam 108 onto the component 74 and measure a resultant reflected lighting 110 from the component 74 to identify a distance between the probe assembly 76 (e.g., the laser alignment device 94) and the component 74.

Referring to FIGS. 2-5, during an inspection of one or more components of the gas turbine engine 20 (see FIG. 1), including the component 74, the component 74 may first be optically inspected for one or more defects. For example, the component 74 may be inspected on-wing using a borescope inspection tool including a camera or other equipment configured to facilitate visual identification of one or more defects of the component 74. The probe assembly 76 of the inspection system 72 may be inserted into the propulsion system 10 and its gas turbine engine 20 to access the component 74. For example, as shown in FIG. 4, the guide tube 80 and the probe head 82 may be maneuvered into and through the gas turbine engine 20, by an operator, through one or more borescope ports 112 or other access points (e.g., through the engine static structure 30) in the gas turbine engine 20. The operator may maneuver the probe head 82 to inspect portions of the component 74 identified having defects identified during a preceding optical inspection. Alternatively, the operator may maneuver the probe head 82 to inspect all or a substantial portion of the component 74. The operator may position the probe head 82, using the laser alignment device 94, to position the x-ray source 92 and the x-ray detector 96 at a suitable distance and orientation relative to the component 74. The operator may control the probe assembly 76 to scan the component 74 to capture x-ray diffraction image data for the component 74. The x-ray diffraction image data may be two-dimensional (2D) or three-dimensional (3D) image data for the component 74. The x-ray diffraction image data may be analyzed by the controller 98 or another computer-based system to identify material characteristics of the component 74. For example, the memory 102 may include instructions which, when executed by the processor 100, cause the processor 100 to identify material characteristics of the component 74 and/or identify the component 74 is acceptable or unacceptable for continued use and operation with the gas turbine engine 20. The controller 98 may identify a localized strain and/or stress of the component 74 by calculating a residual stress and/or strain (sometimes referred to as "macro stress" and a "macro strain") of a target material of the component 74. The controller 98 may identify the strain and/or the stress of the component 74 at (e.g., on, adjacent, or proximate) a defect of the component 74 (e.g., identified during an preceding optical inspection of the component 74). The controller 98 may identify the component 74 is acceptable where the controller 98 identifies the strain and/or the stress being less than a predetermined strain threshold and/or a predetermined stress threshold, respectively. Conversely, the controller 98 may identify the component 74 is unacceptable where the controller 98 identifies the strain and/or the stress being greater than the predetermined strain threshold and/or the predetermined stress threshold, respectively. Routine experimentation and/or analysis may be performed by one of ordinary skill in the art to select a strain threshold and/or a stress threshold suitable for identifying acceptability of a given material using an x-ray diffraction technique, in accordance with and as informed by one or more aspects of the present disclosure.

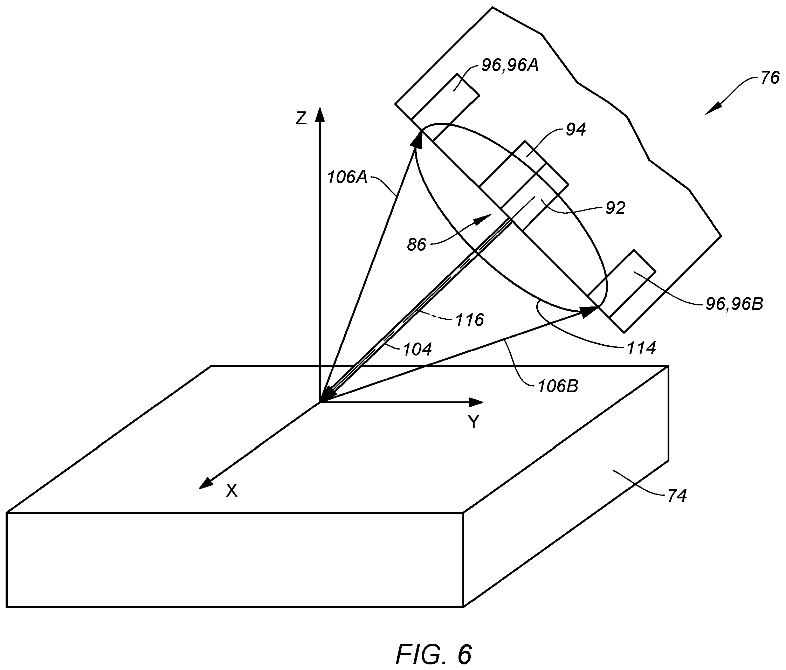

Referring to FIG. 6, an embodiment of the probe assembly 76 is schematically illustrated. The probe assembly 76 includes the x-ray source 92, the laser alignment device 94, and the x-ray detectors 96 disposed at (e.g., on, adjacent, or proximate) the distal end 86. The probe assembly 76 of FIG. 6 includes a first x-ray detector 96A and a second x-ray detector 96B. The first x-ray detector 96A and the second x-ray detector 96B are disposed on the distal end 86 at (e.g., on, adjacent, or proximate) a ring 114 (e.g., a Debye-Scherrer ring). The ring 114 extends circumferentially about a beam axis 116 of the x-ray detector 96 along which the x-ray detector 96 directs the x-ray beam 104. The first x-ray detector 96A and the second x-ray detector 96B are disposed on circumferentially opposite portions of the ring 114, however, the present disclosure is not limited to any particular relative circumferential positioning of the x-ray detectors 96 on the ring 114. Additionally, while the probe assembly 76 of FIG. 6 is illustrated with two x-ray detectors 96, 96A, 96B, the probe assembly 76 may alternatively include greater than two x-ray detectors 96 disposed at (e.g., on, adjacent, or proximate) the ring 114. Each of the x-ray detectors 96A, 96B of FIG. 6 are configured to receive a respective, discrete x-ray diffraction 106A, 106B of the x-ray beam 104 by the component 74. For example, as shown in FIG. 6, each of the x-ray diffractions 106A, 106B received by the x-ray detectors 96A, 96B may have a different angle relative to an inspected surface of the component 74 compared to the other of the x-ray diffractions 106A, 106B.

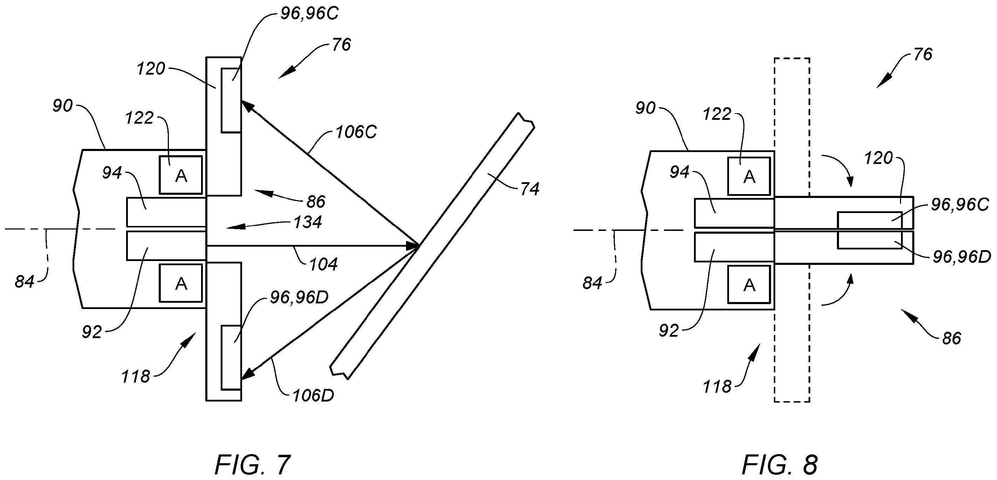

Referring to FIGS. 7 and 8, another embodiment of the probe assembly 76 is schematically illustrated. The probe assembly 76 includes the x-ray source 92, the laser alignment device 94, and the x-ray detectors 96 disposed at (e.g., on, adjacent, or proximate) the distal end 86. The probe assembly 76 of FIGS. 7 and 8 further includes a detector actuation assembly 118 including the x-ray detectors 96. The detector actuation assembly 118 includes at least one detector panel 120 and at least one actuator 122. The detector panel 120 is pivotably mounted to the housing 90. The detector panel 120 is pivotable (e.g., foldable) between a deployed position and a stowed position. FIG. 7 illustrates the detector panel 120 in the deployed position and FIG. 8 illustrates the detector panel 120 in the stowed position. The actuator 122 is disposed at (e.g., on, adjacent, or proximate) and/or within the housing 90. The actuator 122 is operably connected to the detector panel 120. The actuator 122 is configured to effect pivoting of the detector panel 120 between the deployed position and the stowed position. The actuator 122 may be configured as an electro-mechanical actuator or any other suitable actuator configuration for pivoting the detector panel 120 between the deployed position and the stowed position. As shown in FIG. 7, in the deployed position, the detector panel 120 has a greater radial span (e.g., relative to the centerline 84) than the detector panel 120 in the stowed position. For example, as shown in FIG. 8, the detector panel 120 in the deployed position may have a radial span (e.g., relative to the centerline 84) which is less than a radial span of the housing 90. The probe assembly 76 of FIG. 6 includes a first x-ray detector 96C and a second x-ray detector 96D. The first x-ray detector 96C and the second x-ray detector 96D are disposed on or otherwise formed by the detector panel 120. Of course, while the probe assembly 76 of FIGS. 7 and 8 is illustrated with two x-ray detectors 96, 96C, 96D, the probe assembly 76 may alternatively include greater than two x-ray detectors 96. Each of the x-ray detectors 96C, 96D of FIGS. 7 and 8 are configured to receive a respective, discrete x-ray diffraction 106C, 106D of the x-ray beam 104 by the component 74. For example, as shown in FIG. 7, each of the x-ray diffractions 106C, 106D received by the x-ray detectors 96C, 96D may have a different angle relative to an inspected surface of the component 74 compared to the other of the x-ray diffractions 106C, 106D.

The detector panel 120 may be configured as an annular panel body extending circumferentially about (e.g., completely around) the centerline 84). For example, the detector panel 120 may be formed by a flexible panel body material configured to fold and unfold as the detector panel 120 pivots between the stowed position and the deployed position. The detector panel 120 may form and circumscribe a center aperture 134 along the centerline 84. The center aperture 134 may be disposed coincident with the x-ray source 92 and the laser alignment device 94. Alternatively, the probe assembly 76 may include a plurality of the detector panels 120 with each detector panel 120 pivotably mounted to the housing 90 and including a respective one of the x-ray detectors 96, 96C, 96D. The pivotable detector actuation assembly 118 of FIGS. 7 and 8 facilitates a larger x-ray detection area (and hence improved x-ray diffraction image data resolution) while allowing the probe assembly 76 to be inserted into, removed from, and maneuvered within the gas turbine engine 20 with a reduced radial area (e.g., relative to the centerline 84) footprint.

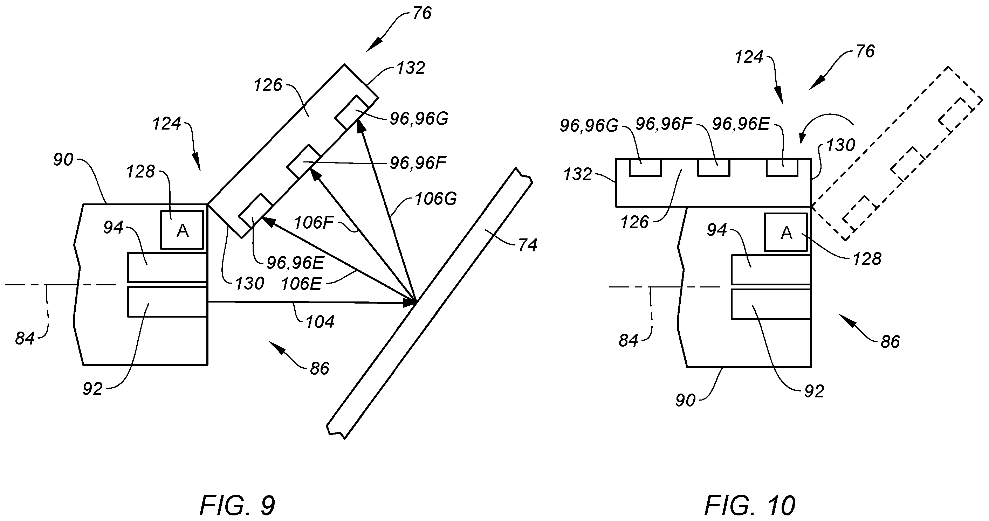

Referring to FIGS. 9 and 10, another embodiment of the probe assembly 76 is schematically illustrated. The probe assembly 76 includes the x-ray source 92, the laser alignment device 94, and the x-ray detectors 96 disposed at (e.g., on, adjacent, or proximate) the distal end 86. The probe assembly 76 of FIGS. 9 and 10 further includes a detector actuation assembly 124 including the x-ray detectors 96. The detector actuation assembly 124 includes a detector panel 126 and at least one actuator 128. The detector panel 126 is pivotably mounted to the housing 90. The detector panel 126 extends lengthwise between and to a proximal end 130 and a distal end 132. The detector panel 126 is pivotably mounted to the housing 90 at (e.g., on, adjacent, or proximate) the proximal end 130. The detector panel 126 is pivotable (e.g., foldable) between a deployed position and a stowed position. FIG. 9 illustrates the detector panel 126 in the deployed position and FIG. 10 illustrates the detector panel 126 in the stowed position. The actuator 128 is disposed at (e.g., on, adjacent, or proximate) and/or within the housing 90. The actuator 128 is operably connected to the detector panel 126. The actuator 128 is configured to effect pivoting of the detector panel 126 between the deployed position and the stowed position. The actuator 128 may be configured as an electro-mechanical actuator or any other suitable actuator configuration for pivoting the detector panel 126 between the deployed position and the stowed position. As shown in FIG. 9, in the deployed position, the detector panel 126 has a greater radial span (e.g., relative to the centerline 84) than the detector panel 126 in the stowed position. The probe assembly 76 of FIGS. 9 and 10 includes a first x-ray detector 96E, a second x-ray detector 96F, and a third x-ray detector 96G. The first x-ray detector 96E, the second x-ray detector 96F, and the third x-ray detector 96G are arrayed along the detector panel 126 in the lengthwise direction between the proximal end 130 and the distal end 132. Of course, while the probe assembly 76 of FIGS. 7 and 8 is illustrated with three x-ray detectors 96, 96E-G, the probe assembly 76 may alternatively include greater than three x-ray detectors 96. The detector panel 126 in the deployed position locates the x-ray detectors 96E-G to receive a respective, discrete x-ray diffraction 106E-G of the x-ray beam 104 by the component 74. For example, as shown in FIG. 9, each of the x-ray diffractions 106E-G received by the x-ray detectors 96E-G may have a different angle relative to an inspected surface of the component 74 compared to the other of the x-ray diffractions 106E-G. The pivotable detector actuation assembly 124 of FIGS. 9 and 10 facilitates a larger x-ray detection area (and hence improved x-ray diffraction image data resolution) while allowing the probe assembly 76 to be inserted into, removed from, and maneuvered within the gas turbine engine 20 with a reduced radial area (e.g., relative to the centerline 84) footprint.

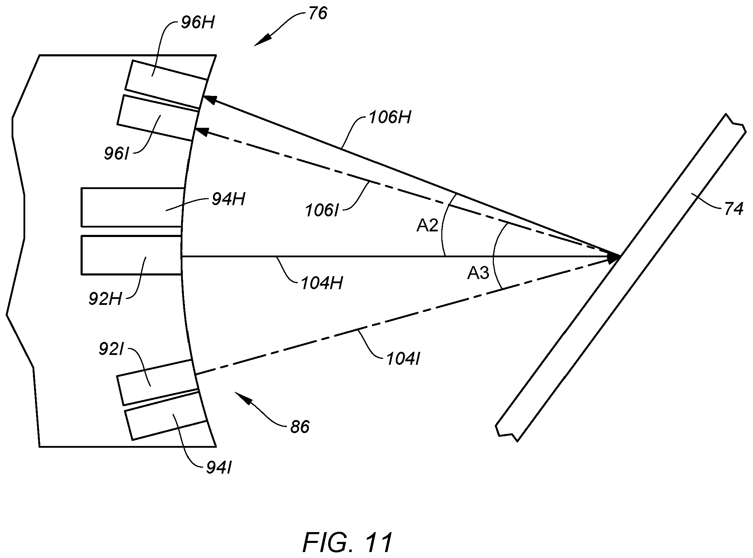

Referring to FIG. 11, another embodiment of the probe assembly 76 is schematically illustrated. The probe assembly 76 includes the x-ray sources 92, the laser alignment devices 94, and the x-ray detectors 96 disposed at (e.g., on, adjacent, or proximate) the distal end 86. The probe assembly 76 of FIG. 11 includes a first x-ray source 92H, a second x-ray source 92I, a first laser alignment device 94H, a second lateral alignment device 94I, a first x-ray detector 96H, and a second x-ray detector 96I. The first x-ray source 92H is configured to direct a first x-ray beam 104H to the component 74 and the second x-ray source 92I is configured to direct a second x-ray beam 104I to the component 74, for example, at (e.g., on, adjacent, or proximate) a same position on the component 74. The first x-ray source 92H may be different than the second x-ray source 92I. For example, the first x-ray source 92H and the second x-ray source 92I may be configured to emit x-ray beams of different wavelengths. The first x-ray detector 96H is positioned on the housing 90, relative to the first x-ray source 92H, to receive a first x-ray diffraction 106H at a first angle A2 relative to the direction of the first x-ray beam 104H. The second x-ray detector 96I is positioned on the housing 90, relative to the second x-ray source 92I, to receive a second x-ray diffraction 106I at a second angle A3 relative to the direction of the x-ray beam 104I. The first angle A2 may be different than the second angle A3. The probe assembly 76 of FIG. 11 may facilitate simultaneous identification of material characteristics of different target materials of the component 74.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An x-ray inspection system (72) comprising:
a probe assembly (76) including a probe head (82), the probe head (82) includes a housing (90), at least one x-ray source (92), and a plurality of x-ray detectors (96),
the housing (90) extends along a centerline (84) of the probe assembly (76) between a proximal end (88) of the probe head (82) and a distal end (86) of the probe head (82),
the at least one x-ray source (92) is disposed at the housing (90), and the at least one x-ray source (92) is configured to generate and direct a x-ray beam (104) to a target material of a component (74), and
the plurality of x-ray detectors (96) includes at least a first x-ray detector and a second x-ray detector disposed at the housing (90), and each of the first x-ray detector and the second x-ray detector is configured to receive an x-ray diffraction (106) of the target material resulting from an interaction with the x-ray beam (104); and
a control assembly (78) including a controller (98), the controller (98) includes a processor (100) connected in signal communication with a non-transitory memory (102) including instructions which, when executed by the processor (100), cause the processor (100) to:
scan the component (74) by controlling the at least one x-ray source (92) to direct the x-ray beam (104) to the target material and capturing material composition data for the target material from the x-ray diffraction (106) received by the first x-ray detector (96) and the second x-ray detector (96), and
calculate one or both of a strain and a stress of the target material based on the material composition data.

2. The x-ray inspection system (72) of claim 1, wherein the probe assembly (76) further includes a flexible borescope guide tube (80) connected to the probe head (82) at the proximal end (88).

3. The x-ray inspection system (72) of claim 1 or 2, wherein the probe head (82) further includes a laser alignment device (94) disposed at the housing (90), and the laser alignment device (94) is configured to measure a distance between the probe head (82) and the component (74).

4. The x-ray inspection system (72) of claim 1, 2 or 3, wherein the instructions, when executed by the processor (100), further cause the processor (100) to identify an acceptable condition or an unacceptable condition of the component (74) by comparing the one or both of the strain and the stress to a threshold for the target material.

5. The x-ray inspection system (72) of any preceding claim, wherein each x-ray detector of the plurality of x-ray detectors (96) is disposed at the distal end (86) on a ring (114), and the ring (114) extends circumferentially about a beam axis (116) of the at least one x-ray source (92).

6. The x-ray inspection system (72) of any preceding claim, wherein the probe assembly (76) further includes at least one detector panel (120; 126) pivotably mounted to the housing (90), and the plurality of x-ray detectors (96) are disposed on the at least one detector panel (120; 126).

7. The x-ray inspection system (72) of claim 6, wherein the at least one detector panel (120; 126) includes a flexible panel body, the flexible panel body extends circumferentially about the centerline (84), and the plurality of x-ray detectors (96) are disposed on the flexible panel body,
wherein, optionally, the flexible panel body forms a center aperture (134) at the centerline (84), and the at least one x-ray source (92) is configured to direct the x-ray beam (104) through the center aperture (134).

8. The x-ray inspection system (72) of claim 6 or 7, wherein the at least one detector panel (120; 126) includes a single detector panel, the single detector panel extends lengthwise between and to a proximal panel end (130) and a distal panel end (132), the single detector panel is pivotably mounted to the housing (90) at the proximal panel end, and the plurality of detectors are arrayed lengthwise on the single detector panel (120; 126).

9. The x-ray inspection system (72) of claim 6, 7 or 8, wherein the probe assembly (76) further includes an actuator (122; 128) disposed at the housing (90), the actuator (122; 128) is operably connected to the at least one detector panel (120; 126), the actuator (122; 128) is configured to pivot the at least one detector panel (120; 126) between a deployed position and a stowed position, and in the deployed position the at least one detector panel (120; 126) has a greater radial span, relative to the centerline (84), than the at least one detector panel (120; 126) in the stowed position.

10. The x-ray inspection system (72) of any preceding claim, wherein the at least one x-ray source (92) includes a first x-ray source and a second x-ray source,
wherein, optionally, the first x-ray source has a first x-ray beam wavelength, the second x-ray source has a second x-ray beam wavelength, and the first x-ray beam wavelength is different than the second x-ray beam wavelength.

11. A method for inspecting a component (74) of a gas turbine engine (20) for an aircraft propulsion system using an x-ray inspection system (72), the method comprising:
scanning the component (74) with a probe assembly (76) of the x-ray inspection system (72) by directing an x-ray beam (104) from at least one x-ray source (92) of the probe assembly (76) to a target material of the component (74) and capturing material composition data for the target material from an x-ray diffraction (106) received by a plurality of x-ray detectors (96) of the probe assembly (76), the x-ray diffraction (106) resulting from an interaction of the target material with the x-ray beam (104);
calculating one or both of a strain and a stress of the target material based on material composition data captured from the x-ray diffraction (106) received by the plurality of x-ray detectors (96); and
identifying an acceptable condition or an unacceptable condition of the component (74) by comparing the one or both of the strain and the stress to a threshold for the target material.

12. The method of claim 11, further comprising optically inspecting the component (74) to identify a defect of the component (74), wherein scanning the component (74) with the probe assembly (76) includes scanning the component (74) at the defect.

13. The method of claim 11 or 12, further comprising:
positioning the probe assembly (76) relative to the component (74), prior to scanning the component (74) with the probe assembly (76), a first x-ray detector of the plurality of x-ray detectors (96) positioned to receive the x-ray diffraction (106) at a first angle relative to a scanned surface of the component (74), a second x-ray detector of the plurality of x-ray detectors (96) positioned to receive the x-ray diffraction (106) at a second angle relative to the scanned surface, and the first angle is different than the second angle; and/or
positioning the probe assembly (76) at a predetermined distance from the component (74), prior to scanning the component (74) with the probe assembly (76), using a laser alignment device (94) of the probe assembly (76).

14. The method of claim 11, 12 or 13, wherein the step of scanning the component (74) with the probe assembly (76) is performed with the component (74) and the gas turbine engine (20) installed on an aircraft (1000).

15. The method of claim 11, 12, 13 or 14, wherein the probe assembly (76) includes a probe head (82), the probe head (82) includes a housing (90), at least one detector panel (120; 126), an actuator (122; 128), the x-ray source (92), and the plurality of x-ray detectors (96), the housing (90) extends along a centerline (84) of the probe assembly (76), the at least one detector panel (120; 126) is pivotably mounted to the housing (90), the actuator (122; 128) is operably connected to the at least one detector panel (120; 126), and the plurality of x-ray detectors (96) are disposed on the at least one detector panel (120; 126),
wherein, optionally, the method further comprises pivoting the at least one detector panel (120; 126) from a stowed position to a deployed position with the actuator (122; 128) prior to scanning the component (74) with the probe assembly (76), and in the deployed position the at least one detector panel (120; 126) has a greater radial span, relative to the centerline (84), than the at least one detector panel (120; 126) in the stowed position, and
wherein, further optionally, the method further comprises inserting the probe assembly (76) into the gas turbine engine (20) and positioning the probe assembly (76) at the component (74) with the at least one detector panel (120; 126) in the stowed position.
